Europäisches Patentamt

European Patent Office

Office européen des brevets

(19)

(11) Numéro de publication: **0 271 398 B1**

(12) **FASCICULE DE BREVET EUROPEEN**

(45) Date de publication de fascicule du brevet:
**22.01.92**

(51) Int. Cl.5: **G01N 35/02**, G01N 35/06

(21) Numéro de dépôt: **87402653.7**

(22) Date de dépôt: **24.11.87**

(54) **Dispositif et récipient pour la détection et la quantification d'agglutinats.**

(30) Priorité: **24.11.86 FR 8616325**

(43) Date de publication de la demande:
**15.06.88 Bulletin 88/24**

(45) Mention de la délivrance du brevet:
**22.01.92 Bulletin 92/04**

(84) Etats contractants désignés:
**AT BE CH DE ES GB GR IT LI LU NL SE**

(56) Documents cités:
**EP-A- 0 107 580**     **EP-A- 0 109 613**
**WO-A-83/02191**      **DE-A- 2 553 129**
**US-A- 3 193 358**     **US-A- 4 451 433**

(73) Titulaire: **LE MATERIEL BIOMEDICAL Société
à Responsabilité Limitée dite:
4 rue de Presbourg
F-75116 Paris(FR)**

(72) Inventeur: **Benajam, Alain
8 rue Blanqui
F-93200 Saint Denis(FR)**

(74) Mandataire: **Bonnetat, Christian et al
CABINET BONNETAT 23, Rue de Léningrad
F-75008 Paris(FR)**

# Description

La présente invention concerne un dispositif pour la détection et la quantification d'agglutinats susceptibles d'être formés, sous l'action d'au moins un réactif, par des particules en suspension dans un liquide, ainsi qu'un récipient intermédiaire utilisable dans ce dispositif.

L'invention peut être utilisée chaque fois que l'on a à détecter et à quantifier des agglutinats. Cependant, elle s'applique particulièrement bien en immunohématologie, notamment en vue de la détermination des groupes sanguins. On sait en effet que la détermination des groupes sanguins est liée à la recherche de l'existence dans le sang d'antigènes érythrocytaires. Les réactions immunocytologiques, face à un antigène de groups spécifique, se traduisent par un phénomène d'agglutination des hématies, si ces dernières appartiennent à un autre groupe. Ces hématies peuvent former soit des agglutinats uniformes sans hématies libres, soit quelques gros agglutinats, ou bien encore un grand nombre de petits agglutinats.

Quoique la présente invention ne soit pas limitée dans ses applications à l'immunohématologie, elle sera décrite ci-après plus particulièrement en rapport avec cette application particulière.

On connaît déjà, par la demande FR-A-2 535 058 appartenant à la même Demanderesse, un dispositif pour la détection et la quantification d'agglutinats susceptibles d'être formés, sous l'action d'au moins un réactif liquide, par des particules en suspension dans des doses de liquides à tester, du type comportant :

- un support horizontal transparent présentant des alvéoles répartis en lignes et/ou en colonnes,
- des moyens d'observation par transparence des fonds des alvéoles contenant d'éventuels agglutinats, disposés horizontalement à poste fixe selon un agencecement linéaire, ledit support étant monté mobile en translation par rapport auxdits moyens d'observation,
- un bras oscillant pouvant tourner autour d'un axe vertical, et pourvu de moyens de prélèvement et de restitution de doses de réactifs et de liquides à tester pour les amener dans lesdits alvéoles du support transparent,
- des moyens de stockage desdits réactifs, et
- des moyens de transport pour amener, à travers un certain nombre de postes de traitement, les doses de liquides à tester jusqu'à l'endroit de leur prélèvement par l'intermédiaire du bras oscillant.

Or, dans ce cas, les doses de liquides à tester sont transportées dans des tubes spécialement conçus pour contenir une quantité très faible de liquide, ce qui est nécessaire car, avant de déterminer si des agglutinats se forment sous l'action d'un réactif, il convient de faire subir aux liquides à tester des traitements intermédiaires sur de petits volumes de ceux-ci. On ne peut donc pas utiliser, dans le dispositif, des tubes à essai classiques dont le volume est trop important. Cependant, l'utilisation desdits tubes spéciaux présente des difficultés, notamment du fait qu'il n'est pas aisé pour un opérateur de transférer, en général manuellement, le liquide à tester d'un réservoir, par exemple un tube à essai ou une éprouvette classique, au tube spécial de faible volume en raison même du faible volume de ce dernier.

Par ailleurs, par le brevet EP-A-0 185 330, on connaît un dispositif pour tester des doses de liquides, du type comprenant :

- des premiers moyens de prélèvement et de restitution de doses de liquides à tester, pour prélever lesdites doses dans des tubes à essai ou éprouvettes usuels ou analogues, qui sont amenés par des premiers moyens de transport en regard desdits premiers moyens de prélèvement, et pour amener lesdites doses dans un récipient comportant une pluralité d'alvéoles susceptibles de recevoir, chacun, une dose de liquide à tester, et
- des moyens de traitement desdites doses de liquides à tester, notamment sous l'action d'au moins un réactif liquide.

Aussi, la présente invention a pour but d'éviter les inconvénients mentionnés ci-dessus, et concerne un dispositif perfectionné du type indiqué ci-dessus qui est adapté pour permettre l'utilisation, dans le dispositif, de tubes à essai classiques dans lesquels les doses de liquides à tester sont prélevées automatiquement avant de subir les traitements intermédiaires indiqués ci-dessus.

A cette fin, selon l'invention, ledit dispositif est caractérisé en ce que ledit récipient comporte deux séries adjacentes d'alvéoles, lesdites séries d'alvéoles s'étendant suivant l'axe longitudinal du récipient de part et d'autre dudit axe, une partie de chaque alvéole d'une série s'étendant au-delà dudit axe longitudinal, l'alvéole correspondant de l'autre série s'étendant de la même façon au-delà dudit axe.

Chaque série d'alvéoles peut correspondre, dans ce cas, à une phase du liquide à tester, les phases étant successivement prélevées par les moyens de prélèvement. En outre, grâce à cet agencement du récipient, un mouvement relatif de faible amplitude permet de passer d'un alvéole d'une série à l'alvéole correspondant de l'autre serie.

De préférence, la cloison de séparation des deux séries d'alvéoles présente, en plan, sensiblement une forme de grecque.

De plus, pour faciliter la détermination de l'amplitude du mouvement relatif entre le récipient intermédiaire et les moyens de prélèvement, le récipient intermédiaire peut comporter des moyens de repère sur au moins une face latérale longitudinale de celui-ci.

Par ailleurs, lesdits premiers moyens de prélèvement comportent au moins une seringue et des moyens d'entraînement de celle-ci selon un mouvement combiné de translations verticale et horizontale entre une position de prélèvement dans un tube à essai ou éprouvette usuel ou analogue de liquide à tester et une position de restitution dans un récipient.

Pour déterminer la phase de liquide prélevée, une sonde peut être associée à chaque seringue. Les premiers moyens de prélèvement peuvent comporter autant de seringues que le récipient comporte d'alvéoles par série.

Dans un mode avantageux de réalisation, le dispositif comporte de plus :

- un support horizontal transparent présentant des alvéoles répartis en lignes et/ou en colonnes,
- des moyens d'observation par transparence des fonds des alvéoles disposés horizontalement à poste fixe selon un agencement linéaire, ledit support étant monté mobile en translation par rapport auxdits moyens d'observation,
- un bras oscillant pouvant tourner autour d'un axe vertical, et pourvu de seconds moyens de prélèvement et de restitution de doses de réactifs et de liquides à tester pour les amener dans lesdits alvéoles du support transparent,
- des moyens de stockage desdits réactifs, et
- des seconds moyens de transport pour amener, à travers un certain nombre de postes de traitement, les doses de liquides à tester jusqu'à l'endroit de leur prélèvement par l'intermédiaire du bras oscillant.

Dans ce cas, le dispositif est caractérisé en ce que les premiers moyens de prélèvement sont prévus à l'entrée des seconds moyens de transport, et en ce que le récipient constitue un récipient intermédiaire pouvant être transporté par lesdits moyens de transport, à travers lesdits postes de traitement, jusqu'à l'endroit où lesdites doses peuvent être prélevées par l'intermédiaire du bras oscillant.

Ainsi, les doses, de très faible volume, de liquides à tester sont prélevées, à l'entrée du dispositif, et amenées chacune dans un alvéole du récipient intermédiaire, chaque dose pouvant ainsi subir les traitements intermédiaires nécessaires, avant d'être à nouveau prélevée et amenée, par l'intermédiaire du bras oscillant, dans un alvéole dudit support où les agglutinats susceptibles d'être formés sous l'action d'un réactif pourront être détectés et quantifiés. Le récipient intermédiaire ainsi vidé est alors évacué à la sortie du dispositif.

Avantageusement, lesdits seconds moyens de transport comportent deux voies de transport orthogonales, l'axe longitudinal dudit récipient intermédiaire étant parallèle à la direction de déplacement de celui-ci sur la première voie et perpendiculaire à la direction de déplacement dudit récipient sur la seconde voie, et les premiers moyens de prélèvement sont prévus à l'entrée de la première voie, et le bras oscillant est prévu au voisinage de la seconde voie qui est parallèle au plan défini par l'axe vertical du bras et l'axe central vertical dudit support.

Ainsi, sur la seconde voie également, un mouvement relatif de faible amplitude entre le récipient intermédiaire et les moyens de prélèvements associés au bras oscillant, de préférence en nombre égal au nombre d'alvéoles d'une série, permet, après avoir, dans un premier temps, prélevées et amenées, dans des alvéoles dudit support, les doses de liquides, contenues dans une première série d'alvéoles, et correspondant à une première phase des liquides à tester, de prélever les doses de liquides, contenues dans la seconde série d'alvéoles et correspondant à une seconde phase desdits liquides, et de les amener dans d'autres alvéoles dudit support. En particulier, quand ledit support est réalisé sous forme d'un disque présentant des alvéoles répartis selon ses rayons, une première phase de liquides à tester sera transférée à une première série d'alvéoles répartis selon un rayon déterminé du disque, tandis que la seconde phase sera transférée dans les alvéoles d'un rayon adjacent. Une telle disposition permet de faciliter la mise en oeuvre du processus proprement dit de détection et de quantification d'agglutinats puisqu'ainsi un seul mouvement du bras oscillant permettra de charger les alvéoles d'un rayon avec le réactif correspondant à une phase particulière de liquides à tester.

La présente invention concerne également les récipients, tels que définis ci-dessus, utilisables dans le dispositif pour tester des doses de liquide.

Les figures du dessin annexé feront bien comprendre comment l'invention peut être réalisée. Sur ces figures, des références identiques désignent des éléments semblables.

La figure 1 est une vue schématique de dessus du dispositif selon l'invention.

La figure 2 est une vue de dessus du récipient intermédiaire utilisable dans le dispositif selon la présente invention.

La figure 3 est une vue do côté, partielle, du récipient de la figure 2.

Les figures 4 et 5 sont des coupes respectivement selon les lignes IV-IV et V-V de la figure 1.

Une installation pour la reconnaissance des groupes sanguins comporte un dispositif 1 selon l'invention pour la détection et la quantification d'agglutinats, associé à un dispositif de visualisation, à un dispositif de commande et à un dispositif d'impression (non représentés). L'ensemble de l'installation est pilotée par un microprocesseur (non représenté) selon un processus non décrit ci-après.

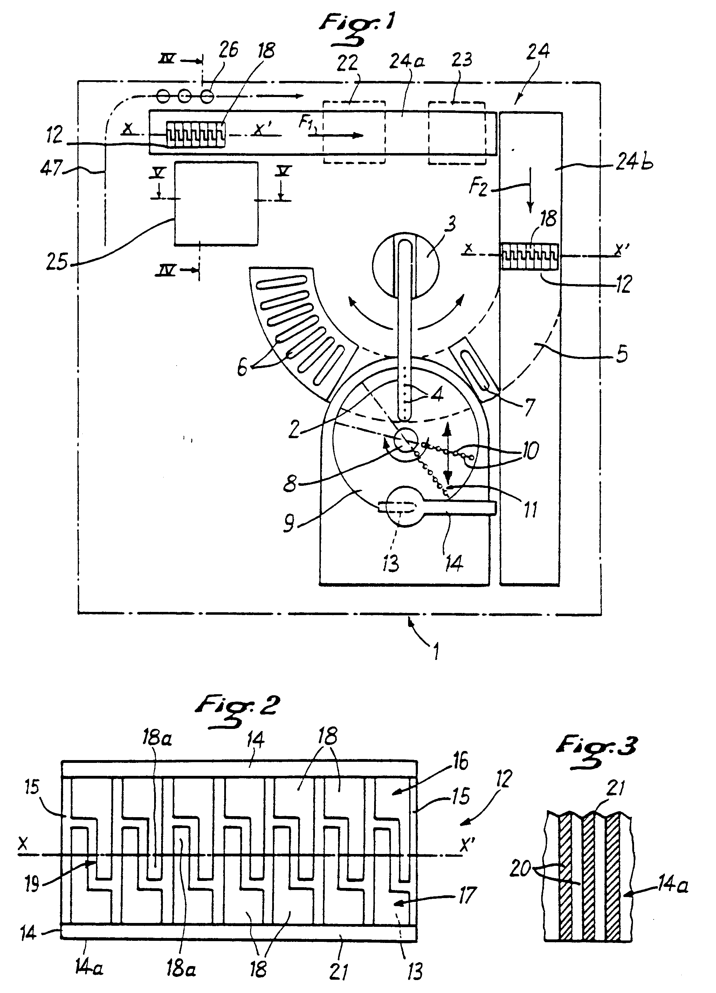

Comme le montre la figure 1, le dispositif 1 selon l'invention comporte un bras oscillant horizontal 2 susceptible de tourner autour d'un axe vertical 3. Le bras 2 porte une pluralité de seringues verticales 4, dont les pistons peuvent être actionnés pour aspirer ou refouler un liquide. Lorsque le bras 2 oscille autour de l'axe vertical 3, les seringues 4 balayent une zone annulaire 5.

Dans cette zone annulaire 5, sont prévus des récipients à réactifs 6, dans chacun desquels les seringues verticales 4 peuvent prélever un réactif, et un récipient de rinçage 7.

Par ailleurs, le dispositif 1 comporte un axe vertical 8 susceptible d'entraîner en rotation un disque 9 de matière transparente dans lequel sont pratiqués des alvéoles 10. Les alvéoles 10 peuvent être répartis selon des rayons du disque 9. Pour des raisons de clarté du dessin, seules deux séries d'alvéoles 10 répartis selon deux rayons du disque 9 ont été représentées. Il est bien évident que le disque 9 peut comporter une pluralité de telles séries disposées sur toute sa surface. Le disque 9 peut, par exemple, être constitué d'un disque supérieur et d'un disque inférieur superposés et assemblés par exemple par collage. Les disques inférieur et supérieur sont en matière synthétique transparente et sont pourvus en leur centre de trous pour permettre le passage de l'arbre rotatif d'entraînement 8 lorsque les disques inférieur et supérieur sont superposés et solidarisés.

Les alvéoles 10 sont en fait, dans ce cas, constitués chacun d'un trou transversant dans le disque supérieur et d'un trou borgne dans le disque inférieur.

Il est bien évident que l'on peut envisager toute autre structure différente pour le disque 9 et les alvéoles 10.

La zone annulaire 5 de balayage des seringues 4 coupe le disque 9 de sorte qu'il est possible de remplir tous les alvéoles 10, disposés sur un rayon 11 du disque 9, en doses de réactifs provenant des réservoirs 6 en introduisant les aiguilles des seringues 4 dans lesdits alvéoles 10. De la même façon, il est possible d'introduire dans les alvéoles 10 des doses de liquides à tester provenant du récipient intermédiaire 12 se trouvant dans la zone 5.

Ainsi, chaque alvéole 10 du disque 9 peut servir de récipient de réaction entre un liquide provenant d'un récipient intermédiaire 12 et un réactif provenant d'un réservoir 6.

Pour examiner le résultat de l'agglutination qui peut en résulter, le dispositif 1 comporte une barrette 13 de diodes CCD, disposée sous le disque 9 en regard d'un dispositif d'éclairage 14. La barrette 13 et le dispositif d'éclairage 14 sont opposés au bras 2 par rapport à l'axe 8, et la barrette 13 est orthogonale au plan vertical défini par les axes 3 et 8. La barrette 13 examine par transparence le fond de chaque alvéole 10 selon une pluralité d'observerations décalées chacune d'un pas. Pour que tous les alvéoles 10 d'un rayon 11 du disque 9 puissent être examinés chacun de cette façon, l'axe 8 du disque est rendu mobile en translation horizontale, orthogonalement à la barrette 13 par des moyens qui ne seront pas décrits plus en détail.

Le récipient intermédiaire 12 est constitué (voir les figures 2 et 3) d'un bloc creux, réalisé en matière synthétique, de forme générale parallélépipédique et comportant un fond 13, des parois latérals longitudinales 14 et des parois latérales transversales 15 ; le dessus dudit bloc restant ouvert. Le récipient intermédiaire 12 comporte deux séries 16 et 17 adjacentes d'alvéoles 18, lesdites séries 16 et 17 d'alvéoles 18 s'étendant suivant l'axe longitudinal X-X′ du récipient 12 de part et d'autre dudit axe, une partie 18a de chaque alvéole 18 d'une série s'étendant au-delà dudit axe longitudinal X-X′, l'alvéole correspondant de l'autre série s'étendant de la même façon au-delà dudit axe.

La cloison de séparation 19 des deux séries 16 et 17 d'alvéoles 18 présente, en plan, sensiblement une forme de grecque ou d'une suite de créneaux.

Des moyens de repère 20, comme des bandes alternativement noires et blanches, sont prévus sur une face latérale longitudinale 14a du récipient, le bord supérieur 21 de la paroi 14 correspondante étant dentelé en correspondance avec lesdites bandes.

A titre d'exemple, on peut donner les dimensions suivantes pour le récipient intermédiaire 12 :
- longueur : 45 mm
- largeur : 20 mm
- hauteur : 16 mm.

Dans l'exemple représenté, le récipient intermédiaire 12 comporte deux séries de sept alvéoles chacune.

Il est avantageux d'utiliser le récipient intermédiaire 12 selon l'invention car, avant de faire réagir les doses de liquides à tester avec un réactif pour éventuellement former des agglutinats, il est nécessaire de faire subir aux doses de liquides à tester des traitements intermédiaires sur des quantités de liquides bien plus faibles que celles habituellement contenues dans des tubes à essai ou éprouvettes classiques.

Les postes de traitement 22, 23 (sur la figure 1, on a représenté deux postes de traitement à titre d'exemple, mais ce nombre n'est absolument pas limitatif) sont répartis le long de moyens de transport 24 pour amener, à travers lesdits postes de traitement, le récipient intermédiaire 12 contenant les doses de liquides à tester jusqu'à l'endroit de leur prélèvement par l'intermédiaire du bras oscillant 2.

A l'entrée des moyens de transport 24, sont prévus des moyens supplémentaires 25 de prélèvement et de restitution de doses de liquides à tester, pour prélever lesdites doses dans des réservoirs 26 (tubes à essai ou éprouvettes classiques) contenant des échantillons de liquides à tester et les amener dans le récipient intermédiaire 12 dont chaque alvéole 18 est susceptible de recevoir une dose de liquide à tester.

Les moyens de transport 24 comportent deux voies de transport 24a, 24b orthogonales, l'axe longitudinal X-X' du récipient intermédiaire 12 étant parallèle à la direction de déplacement (flèche F1) de celui-ci sur la première voie 24a et perpendiculaire à la direction de déplacement (flèche F2) dudit récipient 12 sur la seconde voie 24b.

En fait, les moyens supplémentaires 25 de prélèvement sont prévus à l'entrée de la première voie 24a, tandis que le bras oscillant 2 est prévu au voisinage de la seconde voie 24b qui est parallèle au plan défini par l'axe vertical 3 du bras 2 et l'axe vertical 8 du disque 9.

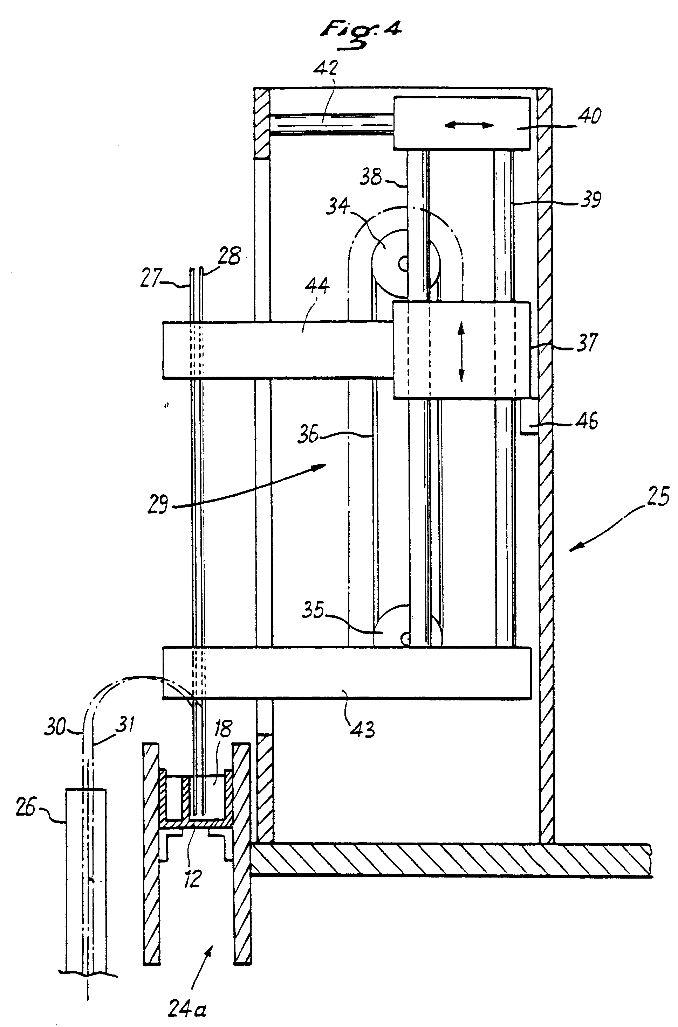

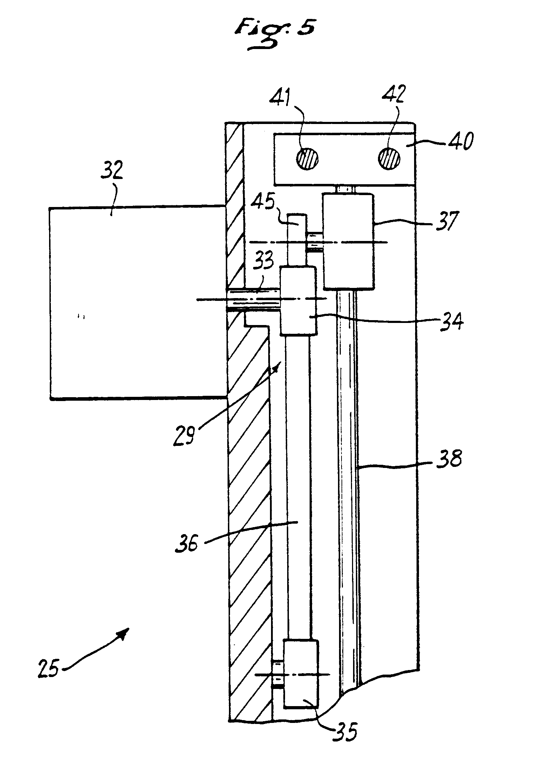

Sur les figures 4 et 5, les moyens supplémentaires 25 de prélèvement comportent une seringue 27, associée à une sonde 28 par exemple du type densimétrique, et des moyens d'entraînement 29 de la seringue et de la sonde selon un mouvement combiné (trajectoires 30 et 31 en traits mixtes sur la figure 4) de translations verticale et horizontale entre une position de prélèvement dans un réservoir (tube à essai 26) de liquide à tester et une position à restitution, illustrée sur la figure 4, dans un récipient intermédiaire 12. Le tube à essai 26 peut être placé dans un porte-tube (non représenté) en étant maintenu en place dans celui-ci, par exemple, par un ressort à lame.

Les moyens d'entraînement 29 comprennent un moteur 32 (figure 5) susceptible d'entraîner en rotation, par l'intermédiaire de son arbre de sortie 33, une poulie supérieure 34 reliée à une poulie inférieure 35 par l'intermédiaire d'une courroie crantée 36.

Un chariot 37 peut coulisser verticalement le long de deux montants 38, 39. Les extrémités supérieures des montants 38, 39 sont solidaires d'un chariot 40 susceptible de coulisser horizontalement le long de deux barres 41, 42. Les extrémités inférieures des montants 38, 39 sont solidaires d'un support horizontal 43 à une extrémité de celui-ci, la seringue 27 et la sonde 28 pouvant coulisser verticalement dans ledit support 43 au voisinage de son autre extrémité. La seringue 27 et la sonde 28 sont fixées, au voisinage de leurs extrémités supérieures, à une extrémité d'un support horizontal 44 dont l'autre extrémité est solidaire du chariot 37.

L'ensemble des chariots 37, 40 est entraînable par les moyens d'entraînement 29 par l'intermédiaire d'un pignon 45 relié au chariot 37.

On notera qu'une butée 46 limite le mouvement de descente du chariot 37 dans la position de restitution (montrée sur la figure 4) dans le récipient intermédiaire 12.

Le fonctionnement du dispositif 1 selon l'invention est le suivant.

Les échantillons de liquides à tester, contenus dans des tubes à essai ou éprouvettes classiques 26, arrivent, par la voie 47, au voisinage de l'entrée de la voie 24a en regard des moyens supplémentaires 25 de prélèvement. Grâce au mouvement combiné de translations horizontale et verticale qu'elle peut effectuer par l'intermédiaire des moyens décrits ci-dessus, la seringue 27 peut prélever une dose de liquide dans le tube 26 et l'amener dans un alvéole 18 du récipient intermédiaire 12 placé sur la voie 24a entre le tube 26 et les moyens 25 prélèvement.

Il est particulièrement avantageux d'utiliser un récipient intermédiaire 12 tel que représenté sur la figure 2 lorsque l'on doit prélever des doses d'un liquide comportant deux phases. Dans un premier temps, la seringue 27 prélève une dose d'une première phase du liquide dans le tube 26 et la déverse dans un alvéole 18 du récipient intermédiaire 12 appartenant à une première série (par exemple 16) d'alvéoles, sensiblement sur l'axe longitudinal X-X' du récipient 12.

Puis, le récipient intermédiaire 12 et les moyens 25 de prélèvement effectuent l'un par rapport aux autres un mouvement relatif de faible amplitude, correspondant sensiblement à une demi-largeur d'alvéole, en translation parallèlement à l'axe longitudinal X-X' du récipient 12. La seringue 27 peut alors prélever une dose de la seconde phase du liquide, repérée grâce à la sonde 28, et la déverser dans l'alvéole correspondant de la seconde série (par exemple 17) d'alvéoles 18 toujours sensiblement sur l'axe longitudinal X-X' du récipient 12, et cela grâce à la forme particulière de la cloison de séparation 19 entre les deux séries 16, 17 d'alvéoles 18. Après un nouveau mouvement relatif identique, la seringue 27 pourra remplir l'alvéole suivant de la première série d'alvéoles d'une dose de la première phase du liquide contenu dans le même tube 26 ou dans un tuve suivant, puis, après encore un autre mouvement relatif identique, remplir l'alvéole suivant correspondant de la seconde série d'alvéoles d'une dose de la seconde phase du liquide. Ainsi, la première série (16 par exemple) d'alvéoles 18 sera remplie de doses d'une première phase de liquide à tester et la seconde série (17 par exemple) de doses de la seconde phase de liquide.

Comme on le verra, cela est particulièrement avantageux dans la suite du processus.

Le récipient intermédiaire 12, une fois rempli, est déplacé sur la voie 24a, en translation parallèlement à son axe longitudinal X-X', à travers les postes de traitement 22, 23, jusqu'à la voie 24b sur laquelle il est transporté, selon un mouvement de translation orthogonalement à son axe longitudinal X-X', jusqu'à l'endroit du prélèvement par l'intermédiaire du bras oscillant 2. Les seringues 4 du bras oscillant 2, en nombre correspondant au nombre d'alvéoles d'une série dans le récipient 12, pourront alors prélever, en une fois, toutes les doses de liquides, contenues dans une première série d'alvéoles de même phase, et les amener dans les alvéoles 10 d'un rayon 11 du disque 9. Puis, après un mouvement relatif de faible amplitude entre le récipient 12 et le bras 2, les seringues 4 pourront prélever, en une fois, toutes les doses de liquides contenues dans la seconde série d'alvéoles 18 et les amener dans les alvéoles d'un rayon adjacent du disque.

Les seringues 4 pourront alors amener des doses de réactif dans les alvéoles 10 à partir des réservoirs 6 à réactifs. Si pour une même phase correspond un même réactif, tous les alvéoles 10 d'un rayon 11 du disque 9 pourront recevoir en une fois leur dose de réactif provenant d'un même réservoir 6. Les agglutinats éventuellement formés peuvent alors être détectés et quantifiés par les moyens d'observation décrits précédemment. Le récipient intermédiaire 12 vidé est évacué du dispositif 1 par la voie 24b.

**Revendications**

1. Dispositif pour tester des doses de liquides, du type comprenant :
   - des premiers moyens (25) de prélèvement et de restitution de doses de liquides à tester, pour prélever lesdites doses dans des tubes à essai ou éprouvettes usuels (26) ou analogues, qui sont amenés par des premiers moyens de transport (47) en regard desdits premiers moyens (25) de prélèvement, et pour amener lesdites doses dans un récipient (12) comportant une pluralité d'alvéoles susceptibles de recevoir, chacun, une dose de liquide à tester, et
   - des moyens de traitement (2-10 ; 22,23) desdites doses de liquides à tester, notamment sous l'action d'au moins un réactif liquide,
   caractérisé en ce que ledit récipient (12) comporte deux séries (16,17) adjacentes d'alvéoles (18), lesdites séries d'alvéoles s'étendant suivant l'axe longitudinal (X-X') du récipient (12) de part et d'autre dudit axe, une partie (18a) de chaque alvéole (18) d'une série s'étendant au-delà dudit axe longitudinal (X-X'), l'alvéole correspondant de l'autre série s'étendant de la même façon au-delà dudit axe.

2. Dispositif selon la revendication 1,
   caractérisé en ce que la cloison de séparation (19) des deux séries (16,17) d'alvéoles (18) présente, en plan, sensiblement une forme de grecque.

3. Dispositif selon la revendication 1 ou la revendication 2,
   catactérisé en ce que le récipient (12) comporte des moyens de repère (20) sur au moins une face latérale longitudinale (14a) de celui-ci.

4. Dispositif selon l'une quelconque des revendications précédentes,
   caractérisé en ce que lesdits premiers moyens (25) de prélèvement comportent au moins une seringue (27) et des moyens d'entraînement (29) de celle-ci selon un mouvement combiné de translations verticale et horizontale entre une position de prélèvement dans un tube à essai ou éprouvette usuel (26) ou analogue de liquide à tester et une position de restitution dans un récipient (12).

5. Dispositif selon la revendication 4,
   caractérisé en ce qu'une sonde (28) est associée à chaque seringue (27).

6. Dispositif selon la revendication 4 ou la revendication 5,
   caractérisé en ce que les moyens (25) de prélèvement comportent autant de seringues que le récipient (12) ne comporte d'alvéoles par série.

7. Dispositif selon l'une quelconque des revendications précédentes, dans lequel sont prévus de plus :
   - un support horizontal transparent (9) présentant des alvéoles (10) répartis en lignes et/ou en colonnes,
   - des moyens (13,14) d'observation par transparence des fonds des alvéoles (10) disposés horizontalement à poste fixe selon un agencement linéaire, ledit support étant monté mobile en translation par rapport auxdits moyens d'observation,

- un bras oscillant (2) pouvant tourner autour d'un axe vertical (3), et pourvu de seconds moyens de prélèvement et de restitution (4) de doses de réactifs et de liquides à tester pour les amener dans lesdits alvéoles (10) du support transparent (9),

- des moyens de stockage (6) desdits réactifs, et

- des seconds moyens de transport (24) pour amener, à travers un certain nombre de postes de traitement (22, 23), les doses de liquides à tester jusqu'à l'endroit de leur prélèvement par l'intermédiaire du bras oscillant (2),

caractérisé en ce que les premiers moyens (25) de prélèvement sont prévus à l'entrée des seconds moyens de transport (24), et en ce que le récipient (12) constitue un récipient intermédiaire pouvant être transporté par lesdits moyens de transport (24), à travers lesdits postes de traitement (22, 23), jusqu'à l'endroit où lesdites doses peuvent être prélevées par l'intermédiaire du bras oscillant (2).

8. Dispositif selon la revendication 7,
caractérisé en ce que lesdits seconds moyens de transport (24) comportent deux voies de transport (24a, 24b) orthogonales, l'axe longitudinal (X-X') dudit récipient intermédiaire (12) étant parallèle à la direction de déplacement de celui-ci sur la première voie (24a) et perpendiculaire à la direction de déplacement dudit récipient (12) sur la seconde voie (24b), et en ce que les premiers moyens (25) de prélèvement sont prévus à l'entrée de la première voie (24a), et le bras oscillant (2) est prévu au voisinage de la seconde voie (24b) qui est parallèle au plan défini par l'axe vertical (3) du bras (2) et l'axe central vertical (8) dudit support (9).

9. Récipient utilisable dans un dispositif pour tester des doses de liquides,
caractérisé en ce qu'il est défini comme indiqué dans l'une quelconque des revendications 1 à 3 précédentes.

## Claims

1. Device for testing liquid doses, of the type comprising :

- first means (25) for taking and restoring samples of liquid doses to be tested, for taking said doses in usual test tubes (26) or similar, which are brought by first transport means (47) opposite said first sampling means (25) and for bringing said doses into a container (12) comprising a plurality of compartments each able to receive a liquid dose to be tested, and

- means (2-10; 22, 23) for treating said liquid doses to be tested, particularly under the action of at least one liquid reagent,

characterized in that said container (12) comprises two adjacent series (16, 17) of compartments (18), said series of compartments extending along the longitudinal axis (X-X') of the container (12) on each side of said axis, a part (18a) of each compartment (18) of a series extending beyond said longitudinal axis (X-X'), the corresponding compartment of the other series extending similarly beyond said axis.

2. Device according to claim 1, characterized in that the partition (19) separating the two series (16, 17) of compartments (18) has, in a plan view, substantially a Greek key-pattern shape.

3. Device according to claim 1 or claim 2, characterized in that the container (12) comprises reference means (20) on at least one longitudinal lateral face (14a) thereof.

4. Device according to any one of the preceding claims, characterized in that said first sampling means (25) comprise at least one syringe (27) and means (29) for driving same in a combined movement of vertical and horizontal translations between a position for taking the samples of liquide doses to be tested into a usual test tube (26) or similar and a position for restoring it into a container (12).

5. Device according to claim 4, characterized in that a probe (28) is associated with each syringe (27).

6. Device according to claim 4 or claim 5, characterized in that the sampling means (25) comprise as many syringes as the container (12) comprises compartments per series.

7. Device according to any one of the preceding claims in which the following are provided in addition :

- a horizontal transparent support (9) having compartments (10) distributed in lines and/or in columns,

- means (13, 14) for observing by transparency the bottoms of the compartments (10) disposed horizontally in a fixed station in a linear arrangement, said support being movable in translation with respect to said observation means,

- a swinging arm (2) rotatable about a vertical axis (3) and having second means (4) for sampling and restoring doses of reagents and liquids to be tested for bringing them into said compartments (10) of the transparent support (9),
- means (6) for storing said reagents, and
- second transport means (24) for bringing said liquid doses to be tested, through a number of treatment stations (22, 23), as far as the position where they are taken by the swinging arm (2),

characterized in that the first sampling means (25) are provided at the input of the second transport means (24) and in that the container (12) forms an intermediate container which can be transported by said transport means (24), through said treatment stations (22, 23) as far as the position where said doses may be taken by means of the swinging arm (2).

8. Device according to claim 7, characterized in that said second transport means (24) comprise two orthogonal transport tracks (24a, 24b), the longitudinal axis (X-X') of said intermediate container (12) being parallel to the direction of movement of the latter over the first track (24a) and perpendicular to the direction of movement of said container (12) over the second track (24b), and in that the first sampling means (25) are provided at the input of the first track (24a), and the swinging arm (2) is provided in the vicinity of the second track (24b) which is parallel to the plane defined by the vertical axis (3) of the arm (2) and the central vertical axis (8) of said support (9).

9. Container which can be used in a device for testing liquid doses, characterized in that it is defined as indicated in any one of the preceding claims 1 to 3.

**Patentansprüche**

1. Vorrichtung zum Testen von Flüssigkeitsdosen, die

- eine erste Einrichtung (25) zur Entnahme und Rückführung der zu testenden Flüssigkeiten, um die Dosen in herkömmlichen Reagenz- oder Probegläsern (26) oder dgl. zu entnehmen, die von ersten Transportmitteln (47) gegenüberliegend von der ersten Entnahmeeinrichtung (25) herangeführt werden, und um die Dosen in einen Rezipienten (12) zu bringen, der mehrere Zellen aufweist, die jeweils eine zu testende Flüssigkeitsdosis aufnehmen können, und

- eine Behandlungseinheit (2-10; 22,23) der zu testenden Flüssigkeitsdosen, insbesondere unter der Wirkung zumindest einer Reagensflüssigkeit aufweist,

dadurch **gekennzeichnet,** daß der Rezipient (12) zwei Reihen (16, 17) angrenzender Zellen (18) aufweist, wobei die Zellenreihen sich der Längsachse (X-X') des Rezipients (12) folgend auf beiden Seiten der Achse erstrecken, ein Teil (18a) jeder Zelle (18) einer Reihe sich über die Längsachse (X-X') hinaus erstreckt, und wobei die entsprechende Zelle der anderen Reihe sich gleichermaßen über die Achse hinaus erstreckt.

2. Vorrichtung nach Anspruch 1, dadurch **gekennzeichnet,** daß die Trennwand (19) der beiden Reihen (16, 17) der Zellen (18) in der Draufsicht mäanderförmig ausgebildet ist.

3. Vorrichtung nach einem der vorhergehenden Ansprüche 1 oder 2, dadurch **gekennzeichnet,** daß der Rezipient (12) ein Hinweis- oder Referenzmittel (20) auf zumindest einer zu ihm längslaufenden Seitenfläche (14a) aufweist.

4. Vorrichtung nach einem der vorhergehenden Ansprüche 1 bis 3, dadurch **gekennzeichnet,** daß die erste Einrichtung (25) der Entnahme zumindest eine Spritze (27) sowie eine Einrichtung zur deren Antrieb gemäß einer vertikalen und horizontalen Verschiebungsbewegung zwischen einer Entnahmestellung in einem herkömmlichen Reagenz- oder Probeglas (26) oder dgl. der zu testenden Flüssigkeit und einer Stellung der Rückführung in einen Rezipient (12) aufweist.

5. Vorrichtung nach Anspruch 4, dadurch **gekennzeichnet,** daß eine Sonde (28) jeder Spritze (27) zugeordnet ist.

6. Vkorrichtung nach einem der vorhergehenden Ansprüche 4 oder 5, dadurch **gekennzeichnet,** daß die Einrichtung (25) zur Entnahme ebensoviele Spritzen wie Rezipienten (12) Zellen pro Reihe aufweist.

7. Vorrichtung nach einem der vorhergehenden Ansprüche 1 bis 6, die darüber hinaus

- eine horizontale transparente Auflage (9), die in Linien und/oder Spalten verteilt liegende Zellen (10) aufweisen,
- eine Einrichtung (13, 14) zum Beobachten mittels Durchsichtigkeit der Böden der Zellen (10), die horizontal und feststehend gemäß einer linearen Anordnung, wobei die Auflage in ihrer Verschiebung gegenüber der Beobachtungseinrichtung (13, 14) beweglich eingesetzt ist,

- einen Schwenkarm (2), der um eine senkrechte Achse (3) drehbar und mit einer zweiten Entnahme- und Rückführungseinrichtung (4) der zu testenden Dosen an Reagentien und Flüssigkeiten, um diese in die Zellen (10) der duchsichtigen Auflage (9) einzubringen,

- eine Einrichtung (6) zum Lagern oder Speichern der Reagentien und

- eine zweite Transporteinrichtung (24) aufweist, um über eine bestimmte Anzahl von Behandlungsposten (22, 23) die zu testenden Flüssigkeitsdosen mit Hilfe des Schwenkarms (2) bis zur Stelle ihrer Entnahme zu führen,

dadurch **gekennzeichnet,** daß die erste Entnahmeeinrichtung (25) am Eingang der zweiten Transporteinrichtung (24) vorgesehen ist, und daß der Rezipient (12) einen Zwischenrezipienten darstellt, der von der Transporteinrichtung (24) über die Behandlungsposten (22, 23) bis zu der Stelle geführt werden kann, wo die Dosen mit Hilfe des Schwenkarms (2) entnommen werden können.

8. Vorrichtung nach Anspruch 7, dadurch **gekennzeichnet,** daß die zweite Transporteinrichtung (24) zwei orthogonale Transportwege (24a, 24b) aufweist, wobei die Längsachse (X-X') des Zwischenrezipienten (12) parallel zu dessen Verschiebungsrichtung auf dem ersten Weg (24a) und senkrecht zur Verschiebungsrichtung des Rezipienten (12) auf dem zweiten Weg (24b) verläuft, und daß die erste Entnahmeeinrichtung (25) am Eingang des ersten Weges (24a) und der Schenkarm (2) in der Nähe des zweiten Weges (24b) vorgesehen ist, der zur Ebene, die durch die vertikale Achse (3) des Arms (2) und die vertikale Mittelachse (8) der Auflage (9) definiert ist, parallel verläuft.

9. In der Vorrichtung zum Testen von Flüssigkeitsdosen verwendbarer Rezipient, dadurch **gekennzeichnet,** daß er, wie in einem der vorhergehenden Ansprüche 1 bis 3 angezeigt, bestimmt ist.

Fig.1

Fig.2

Fig.3

*Fig. 4*

## Fig. 5